# EUROPEAN PATENT APPLICATION

(11) **EP 3 838 464 A1**
(43) Date of publication of application: **23.06.2021**
(21) Application number: 19863597.1
(22) Date of filing: 16.09.2019
(51) Int. Cl.: B23H 7/10, B23H 11/00

(54) **WASTE WIRE RETRIEVAL APPARATUS**

(30) Priority: 19.09.2018 KR 20180112358
(71) Applicant: Seong, Ki Chul, Seoul 08089 (KR)
(72) Inventor: Seong, Ki Chul, Seoul 08089 (KR)
(74) Representative: Hoefer & Partner Patentanwälte mbB
(86) International application number: PCT/KR2019/011910
(87) International publication number: WO 2020/060115

(57) **Abstract**

The present disclosure relates to a waste wire recovery apparatus, which includes: a waste wire recovery unit recovering a waste wire discharged from a wire electric discharge machine while rotating; and a rotational actuator rotating the waste wire recovery unit. Since the waste wire recovery unit rotates when recovering a waste wire, the waste wire can be uniformly received in the waste wire recovery unit. Accordingly, the stack density of the waste wire received in the waste wire recovery unit is improved, so the amount of a waste wire that can be transported at one time on a vehicle, etc. can be increased. Accordingly, the economic efficiency of reusing a waste wire can be improved.

## Description

### [Technical Field]

The present disclosure relates to a waste wire recovery apparatus and, more particularly, a waste wire recovery apparatus that greatly increases the stack density of waste wires that are recovered by rotating a waste wire recovery unit that recovers waste wires discharged after being used from a wire electric discharge machine to be able to reduce the costs for discharging and disposing of waste wires and increase efficiency.

### [Background Art]

In general, a wire electric discharge machine is a machine that cuts a workpiece using a spark by generating electric discharge between the workpiece and a thin wire using the wire as an electrode while winding and unwinding the wire without sagging, and wires that have generated electric discharge are discharged to a recovery apparatus to be disposed of after being used.

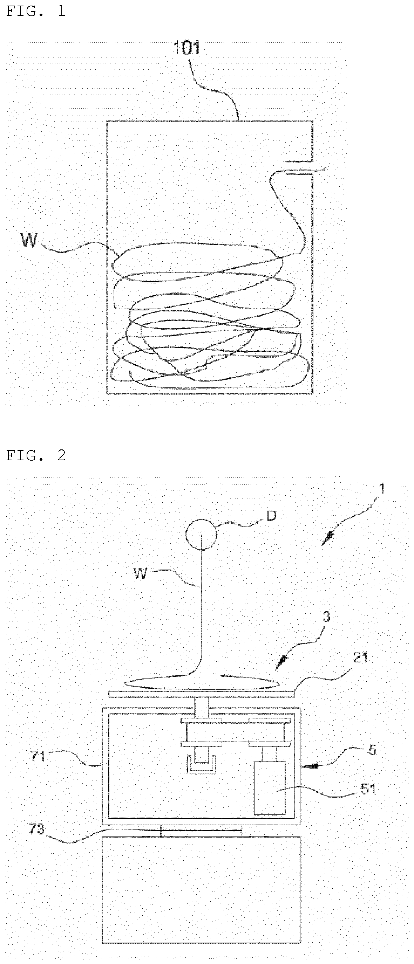

Such a recovery apparatus that recovers used waste wires stores a waste wire W discharged from a wire electric discharge machine into a waste wire recovery box indicated by '101' in FIG. 1. Further, when an appropriate amount of wire W is recovered, the wire is discharged and disposed of in a bundle.

However, according to such a waste wire recovery apparatus of the related art, since the waste wire W put in the recovery box 101 has remaining elasticity, the wire becomes sparse or is entangled when it is recovered, as shown in FIG. 1, so the amount of wire that can be put in the cloth bag to be carried decreases, that is, the stack density of the waste wire is low. Accordingly, when the wire is carried to be reused after being discharged, for example, when the wire is carried in a unit standardized with a predetermined volume such as a container, the wire cannot be sufficiently loaded. Accordingly, there is also a problem that the profit from reusing waste wires does not cover the expenses including carriage, so the efficiency of reusing waste wires decreases. Further, there is another problem that since the efficiency of reusing waste wires decreases, resource is wasted as they give up reusing and discard waste wires.

### [Summary of Invention]

### [Technical Problem]

The present disclosure has been made in an effort to solve the problems of the waste wire recovery apparatus in the related art, and an objective of the present disclosure is to improve economic efficiency of reusing waste wires by greatly increasing the ratio of a margin from reuse of waste wires to the entire expense including carriage for reusing waste wires by greatly increasing the amount of waste wires that can be transported at once by increasing the stack density of waste wires, which are received in a package such as a cloth bag that is used to collect and dispose of waste wires, that is, the recovery amount to the accommodation volume of waste wires.

Another objective of the present disclosure is to improve the economic efficiency of reusing waste wires by reducing the costs for reusing waste wires by simplifying the process of storing, carrying out, and disposing of waste wires.

Another objective of the present disclosure is to improve safety or convenience of work related to collecting or packaging waste wires by improving the structures of parts, adding a function of measuring weight, etc., and performing control in a wireless type.

### [Solution to Problem]

In order to achieve the objects, the present disclosure provides a waste wire recovery apparatus that includes: a waste wire recovery unit recovering a waste wire discharged from a wire electric discharge machine while rotating; and a rotational actuator rotating the waste wire recovery unit.

The waste wire recovery unit includes a plate body for receiving the waste wire, and the rotational actuator is connected to the plate body and rotates the plate body.

The waste wire recovery apparatus further includes a retainer disposed around the plate body and preventing the waste wire received on the plate body from coming out of the plate body.

The retainer is detachably disposed on the plate body, and the plate body further includes a support supporting the retainer.

The plate body includes a slip plate that is rotatably installed on a floor of the plate body to collect the waste wire and relatively rotates in the opposite direction to a rotation direction of the plate body when a rotation speed of the plate body is greater than a drop speed of the waste wire.

The plate body has an arranger protruding at a rotational center.

The arranger is preferably an arranger rod detachably disposed in a longitudinal direction at the rotational center of the plate body.

The waste wire recovery apparatus further includes a binding string for binding the waste wire recovered in the waste wire recovery unit in one bundle.

The waste wire recovery unit includes a cylinder having an opening to receive the waste wire, and the rotational actuator is connected to the cylinder and rotates the cylinder.

The cylinder has an arranger protruding at a rotational center of the floor.

The arranger is preferably an arranger rod disposed in a longitudinal direction at the rotational center of the floor.

The waste wire recovery apparatus further includes a package overlapping the cylinder and fit in the cylinder to receive the waste wire.

The rotational actuator includes: a support rotatably supporting the cylinder; and a driving unit rotating the cylinder on the support.

The waste wire recovery apparatus further includes a heater that heats the waste wire before the waste wire is stacked on the floor of the cylinder.

The rotational actuator includes: a rotation unit supporting and rotating the cylinder; and a driving unit generating torque for the rotation unit.

The rotational actuator includes: a rotation unit supporting and rotating the cylinder and having an arranger disposed in a longitudinal direction through the bottom of the cylinder; and a driving unit generating torque for the rotation unit.

The waste wire recovery apparatus further includes a presser disposed to be longitudinally movable in the cylinder and pressing the waste wire put and stacked in the cylinder.

The waste wire recovery apparatus further includes a bender disposed close to an outlet of the wire electric discharge machine and wrinkling the waste wire discharged from the outlet.

The waste wire recovery apparatus further includes a weight measurer disposed on a frame of the rotational actuator rotatably supporting the waste wire recovery unit and measuring the weight of the waste wire recovered in the waste wire recovery unit.

The weight measurer communicates with a controller or a wire electric discharge machine on the basis of IoT.

### [Advantageous Effects of Invention]

According to the waste wire recovery apparatus of the present disclosure, since the waste wire recovery unit is rotated when a waste wire discharged from a wire electric discharge machine is received into the waste wire recovery unit, the waste wire can be uniformly collected in a skein shape in the waste wire recovery unit. Accordingly, the stack density of the waste wire received in the waste wire recovery unit can be increased. Further, it is possible to greatly improve the economic efficiency of reusing a waste wire such as reducing carriage by considerably increasing the amount of a waste wire that is transported at one time.

Further, since the plate body or the cylinder of the waste wire recovery unit has an arranger or an arranger rod at the rotational center, a waste wire put into the waste wire recovery unit can be more uniformly received. Accordingly, it is possible to improve stack density of the waste wire in comparison to when the waste wire is randomly received.

Further, since the retainer can be separated from the plate body with the waste wire therein, it is possible to more easily collect a bundle of more waste wire with the retainer removed in recovery.

Further, since the package can be put in advance in the cylinder before a waste wire is put into the cylinder, it is possible to more quickly and conveniently carry and dispose of a waste wire in the package in the cylinder without a separate packaging process.

Further, since the rotational actuator for rotating the waste wire recovery unit can rotate the plate body or the cylinder using the driving unit directly connected to the plate body or the cylinder, or can rotate the plate body or the cylinder through the driving unit rotatably supporting the plate body or the cylinder and connected to the plate body or the cylinder, or can indirectly rotate the plate body or the cylinder by rotating the rotation unit to which the plate body or the cylinder is detachably coupled, it is possible to configure a mechanism of the rotational actuator for rotating the plate body or the cylinder in various ways.

Further, even if the speed of the plate body or the cylinder is greater than the drop speed of the waste wire put into the waste wire recovery unit, the waste wire can be stably recovered, as described above, because the slip plate rotatably mounted on the plate body regardless of the speed difference relatively rotates in the opposite direction to the rotational direction of the plate body.

Further, since a waste wire can be heated by a heater before it is dropped on the plate body or the floor of the cylinder and since a waste wire can be wrinkled by the bender installed close to the waste wire outlet, it is possible to reduce or remove the elasticity remaining in the waste wire, so it is possible to improve the density of the received waste wire.

Further, since the arranger rod directly connected to the rotation unit is positioned at the center of the cylinder to detachably couple the cylinder to the rotation unit and indirectly rotate the cylinder through the rotation unit, a waste wire put into the cylinder can be more uniformly received, and accordingly, the stack density of the waste wire can be improved.

Further, since the presser can be disposed to be vertically movable on the plate body or in the cylinder, a waste wire can be pressed when the waste wire is put and stacked on the plate body or in the cylinder. Accordingly, the waste wire can be made compact, so the stack density of the waste wire can be greatly improved.

Further, since the weight of the waste wire received on the plate body or in the cylinder can be measured in real time and the measurement result can be transmitted in real time to a controller, etc., using a wired or wireless type, the operation of collecting a waste wire can be stopped when a desired amount of waste wire is collected. Accordingly, it is possible to easily satisfy the rules in countries that regulate the weight of a unit bundle or waste wire that can be transported at one time.

Further, since a waste wire collected in a skein shape on the plate body or in the cylinder can be bound using a binding string, the waste wire can be more conveniently transported after collection.

### [Brief Description of Drawings]

FIG. 1 is a front view schematically showing a waste wire recovery box of the related art.
FIG. 2 is a front view schematically showing a waste wire recovery apparatus according to an embodiment of the present disclosure.
FIG. 3 is a partial perspective view of the waste wire recovery apparatus with an arranger on a floor of a plate body shown in FIG. 2.
FIG. 4 is a front cross-sectional view of a waste wire recovery unit with a slip plate on the floor of the plate body shown in FIG. 2.
FIG. 5 is a partial view showing the plate body shown in FIG. 4.
FIG. 6 is a front cross-sectional view of the waste wire recovery apparatus with a retainer on the plate body shown in FIG. 2.
FIG. 7 is a front cross-sectional view of the waste wire recovery apparatus with an arranger on the plate body shown in FIG. 6.
FIG. 8 is a perspective view showing the state in which a bundle of wire is collected on the plate body shown in FIG. 2.
FIG. 9 is a front view schematically showing a waste wire recovery apparatus according to another embodiment of the present disclosure.
FIG. 10 is a front cross-sectional view of the waste wire recovery apparatus with an arranger on the floor of a cylinder shown in FIG. 9.
FIG. 11 is a schematic front view of the waste wire recovery apparatus with an arranger rod on the floor of a cylinder shown in FIG. 9.
FIG. 12 is a front view schematically showing the waste wire recovery apparatus with a package in the cylinder shown in FIG. 9.
FIG. 13 is a front view schematically showing a waste wire recovery apparatus according to another embodiment of the present disclosure together with a heater.
FIG. 14 is a front view schematically showing a waste wire recovery apparatus according to another embodiment of the present disclosure together with a presser.
FIG. 15 is a front view schematically showing the waste wire recovery apparatus with an arranger rod directly connected to a rotating unit.
FIG. 16 is a partial perspective view showing the bottom of the cylinder to show a dropping motion of a waste wire into the cylinder shown in FIG. 10.
FIG. 17 is a partial perspective view showing a waste wire recovery apparatus with a bender disposed close to a waste wire outlet according to another embodiment.

### [Description of Embodiments]

A waste wire recovery apparatus according to an embodiment of the present disclosure is described in detail with reference to the accompanying drawings.

A waste wire recovery apparatus of the present disclosure, as indicated by reference numeral '1' in FIG. 2, includes, in a broad meaning, a waste wire recovery unit 3 and a rotational actuator 5.

First, the waste wire recovery unit 3, which is a part for recovering and storing a waste wire W discharged through an outlet D of a wire electric discharge machine (not shown), as shown in FIG. 2, includes a circular plate body 21. However, the plate body 21 should be configured not to be difficult to rotate when a waste wire W is supplied.

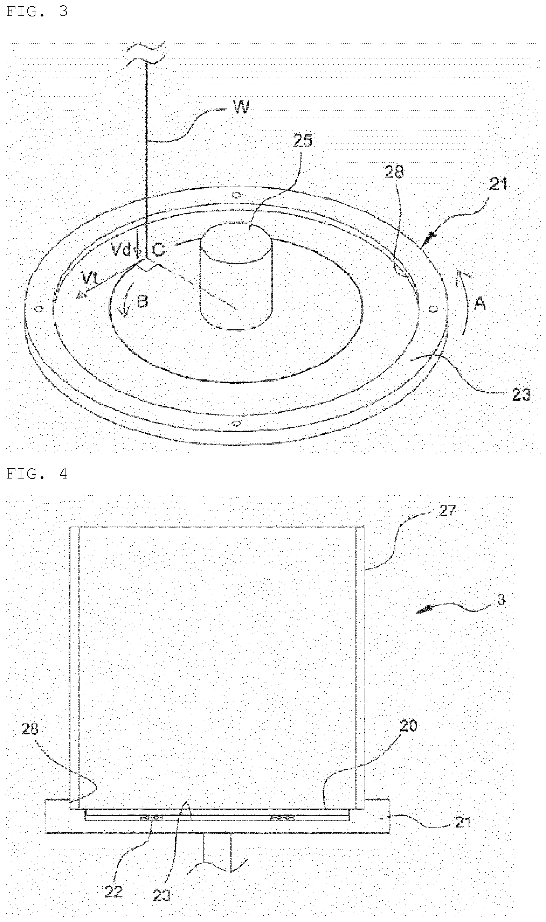

The rotational actuator 5, which is a part rotating the waste wire recovery unit 3, as shown in FIG. 2, includes a driving unit 51 such as a driving motor, and may be connected to the plate body 21 of the waste wire recovery unit 3 through a power transmission unit 53 such as a belt-pulley assembly, or, though not shown in the figures, may be directly connected to the plate body 21. Accordingly, as shown in FIG. 3, the rotational actuator 5 rotates the plate body 21 in the direction of an arrow A or in the opposite direction or stops rotation of the plate body 21 in the direction, depending on turning-on/off of the driving unit 51. When the plate body 21 is rotated in the direction of the arrow A, as described above, a waste wire W is stacked on a floor 23 in a circular shape in the direction of an arrow B.

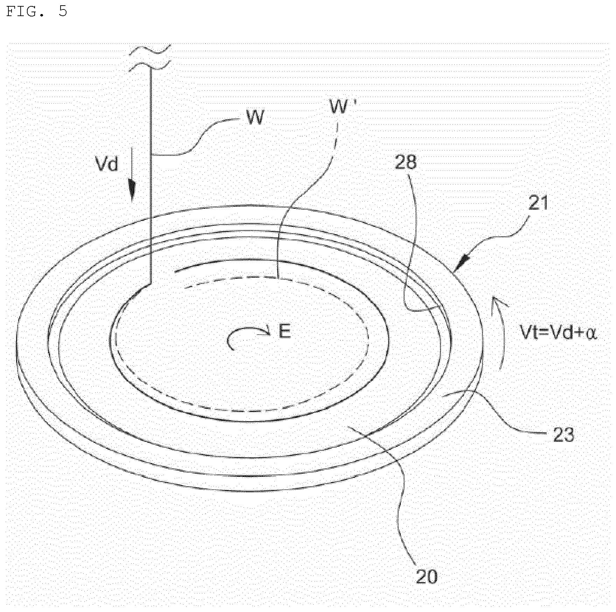

When the speed Vd at which the waste wire W drops onto a specific point C on the floor 23 and the rotation speed, that is, the linear speed Vt of the point C are the same, that is, when the speed Vd and the speed Vt are the same, the waste wire W is stacked in a circular shape without changing the absolute coordinates of the drop point C. However, when the speed Vt is smaller than the speed Vd, the radius of the drop point C gradually increases, so the waste wire W is lifted and becomes sparse similar to when the plate body 21 is not rotated. When the Vt is greater than Vd, as indicated by a dotted line in FIG. 5, the radius of the drop point C of a waste wire W' gradually decreases, and consequently, the waste wire W' is twisted with another waste wire W or is wound and cut on an arranger rod 39.

Accordingly, when the speed Vt of the plate body 21 is smaller than the drop speed Vd, the waste wire recovery apparatus 1 cannot be normally used. However, the plate body 21, as shown in FIGS. 4 and 5, has a slip plate 20 in preparation for the case when the speed Vt of the plate body 21 is greater than the drop speed Vd. The slip plate 20, as shown in FIG. 4, is disposed on the floor 23 of the plate body 21 to be freely rotated with respect to the plate body 21, for example, by a thrust bearing 22, and directly collects a waste wire W dropping to the plate body 21 through the outlet D. Accordingly, as shown in FIG. 5, when the rotation speed Vt of the plate body 21 is greater by α than the drop speed Vd, the slip plate 20 is rotated in the opposite direction to the rotation Vt of the plate body 21 with respect to the plate body 21, that is, is relatively rotated in the direction of an arrow E by rotational resistance of the waste wire W at the low drop speed Vd. Accordingly, the waste wire W is uniformly rotated without the rotational radius reduced, so it becomes a bundle in a skein shape.

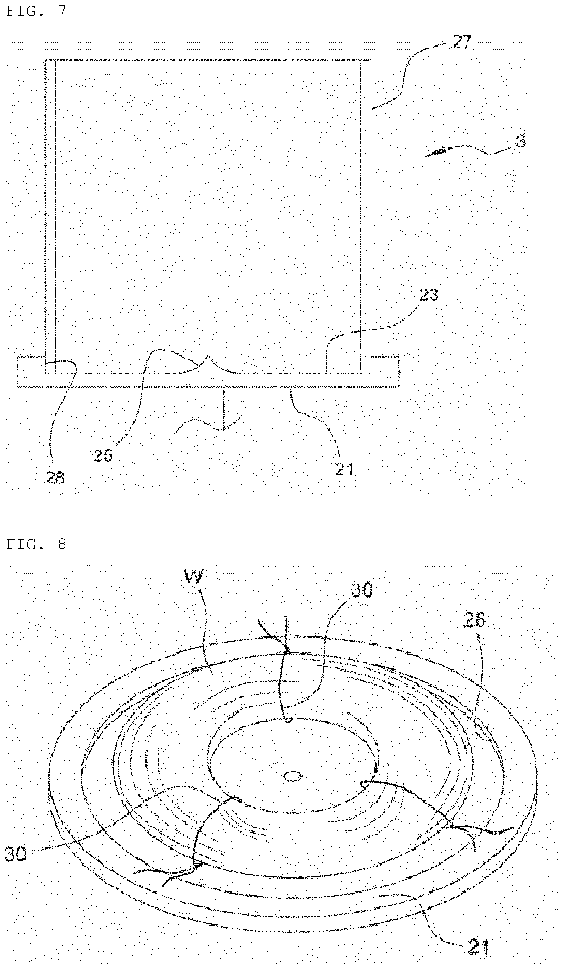

Accordingly, the plate body 21 receives a waste wire W provided from a wire electric discharge machine while rotating at a constant speed and the waste wire W is uniformly stacked in a skein shape on the plate body 21, so the stack density can be increased in comparison to when it is randomly stacked. In particular, the plate body 21 may have an arranger 25 protruding at the rotational center of the floor 23, as shown in FIG. 3. Since the arranger 25 protrudes at the rotational center of the floor 23 of the plate body 21, it enables a waste wire W that is stacked on the floor 23 to be uniformly stacked in the rotational direction of the plate body 2 like a skein without entangle in the early stage of supply. The arranger 25, as shown in FIG. 3, may be simply placed or thread-fastened at the rotational center of the plate body 21 like an arranger rod that longitudinally extend, or may be integrated with the floor 24 of the plate body 21, as shown in FIG. 7.

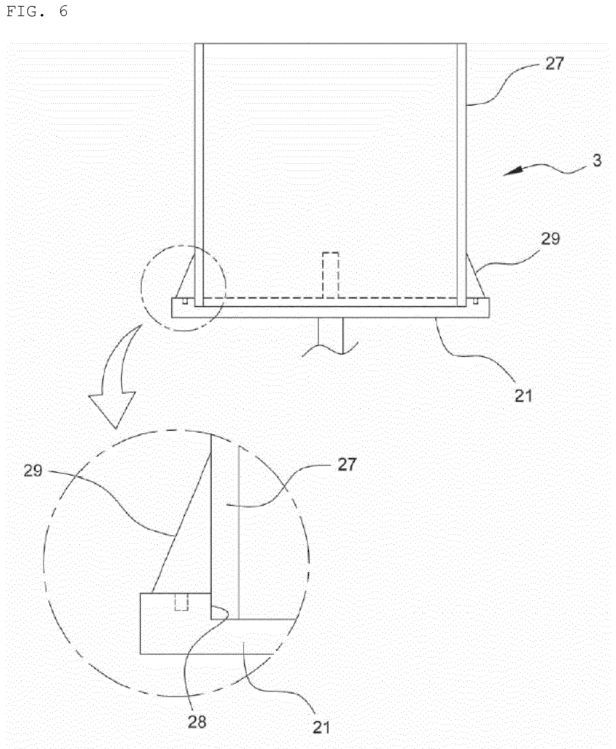

The waste wire recovery unit 3 shown in FIG. 2 may have a retainer 27 disposed around the plate body 21, as shown in FIGS. 6 and 7. The retainer 27, as shown in FIG. 6, is disposed around the plate body 21, thereby preventing a waste wire W received on the plate body 21 from coming out of the plate body 21. In this case, the retainer 27 is a hollow cylinder with open top and bottom, is detachably disposed on the plate body 21, and is rotated with the plate body 21, thereby preventing a waste wire W from coming out of the plate body 21 when the waste wire W is recovered. When recovery is finished, the retainer 27 can be easily separated from the plate body 21, so a bundle of waste wire can be taken out of the plate body 21 after separation. However, although not shown, the retainer 27 may be separated and hung on a ceiling or other external structures to be adjacent over the plate body 21 to prevent separation of a waste wire W from the plate body 21 in a non-rotation state.

The retainer 27 is rotated with the plate body 21 when a waste wire W is recovered. Accordingly, a step 28 may be formed around the plate body 21, as shown in FIGS. 6 and 7, such that the retainer 27 can be more stably installed on the plate body 21. Accordingly, when the retainer 27 is installed on the plate body 21, the lower edge thereof is fitted inside the step 28, whereby a stable posture can be maintained. Further, the retainer 27, as shown in FIG. 6, may further include a wedged support 29 that is detachably coupled on the step 28. Accordingly, the retainer 27 can be detachably installed on the plate body 21 and can be more firmly fixed and supported by the support 29.

The recovery apparatus 1, as shown in FIG. 8, may have binding strings 30 to be able to bind a waste wire W recovered in the waste wire recovery unit 3 in an appropriate size of bundle. Accordingly, a worker can bind a waste wire W uniformly stacked on the plate body 21 in one bundle using the binding strings 30 such that the waste wire W is not disheveled after recovery is finished one time.

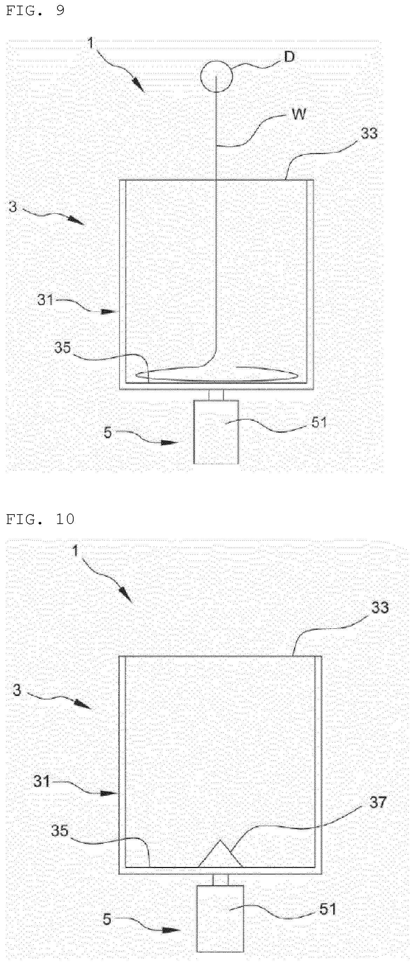

A waste wire recovery apparatus according to another embodiment of the present disclosure, as indicated by reference numeral '1' in FIG. 9, also includes, in a broad meaning, a waste wire recovery unit 3 and a rotational actuator 5.

In this embodiment, first, the waste wire recovery unit 3, which is a part for recovering and storing a waste wire W discharged through the outlet D of a wire electric discharge machine, as shown in FIG. 9, is a hollow cylinder 31 with an opening 33 being open upward to receive a waste wire W. However, the waste wire recovery unit 3 of the present disclosure 3 is also configured to rotate without being interfered with or disturbed by the shape of the cylinder 31.

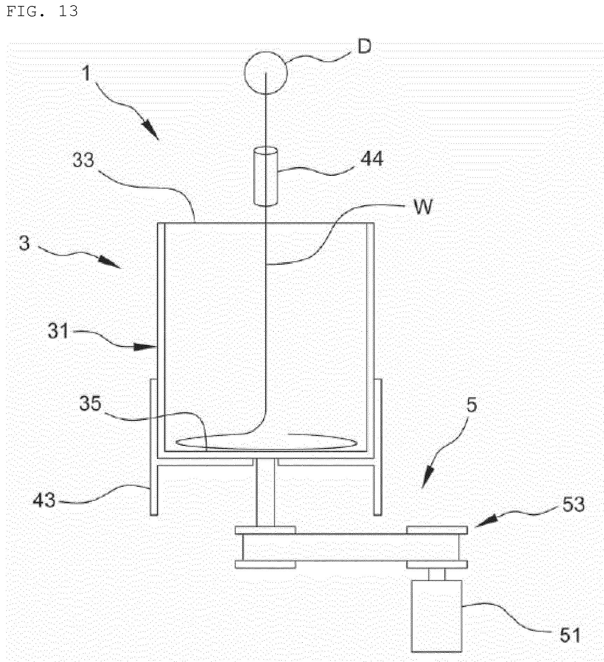

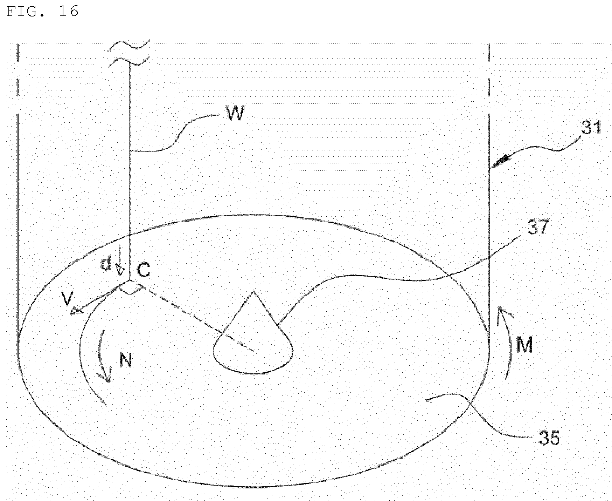

The rotational actuator 5, which is a part rotating the waste wire recovery unit 3, as shown in FIG. 3, may include a driving unit 51 such as a driving motor and may be directly connected to the floor 35 of the waste wire recovery unit 3 or, as shown in FIG. 13, may be indirectly connected to the waste wire recovery unit 3 through a power transmission unit 53 such as a belt-pulley assembly, so it rotates or stops the cylinder 31, depending on turning-on/off of the driving unit 51. Accordingly, as shown in FIG. 16, when the cylinder 31 is rotated in the direction of an arrow M, a waste wire W is stacked on the floor 35 while drawing a circle in the direction of an arrow N. However, in this case, when the speed Vd at which the waste wire W drops onto a specific point C on the floor 35 and the linear speed Vt of the point C are the same, the waste wire W is stacked in a circular shape without changing the absolute coordinates of the drop point C. However, when the speed Vd is greater than the speed Vt, the waste wire W gradually increases in radius at the drop point C or becomes sparse from the floor 35, and when the speed Vd is smaller than the speed Vt, the radius of the drop point C gradually decreases.

Accordingly, the cylinder 31 receives a waste wire W supplied from a wire electric discharge machine while rotating and the waste wire W, similarly, is uniformly stacked in a skein shape in the cylinder 31, so the stack density can be increased in comparison to when it is randomly stacked. In particular, the cylinder 31, as shown in FIG. 10, may have an arranger 37 on the floor 35, and the arranger 37, similarly to the arranger 25, protrudes at the rotational center of the floor 35 of the cylinder 31, so the waste wire W is uniformly stacked on the floor 35 without entangle in the opposite direction to rotation of the cylinder 31. Accordingly, the waste wire W is stacked well in a skein shape in the early stage of supply.

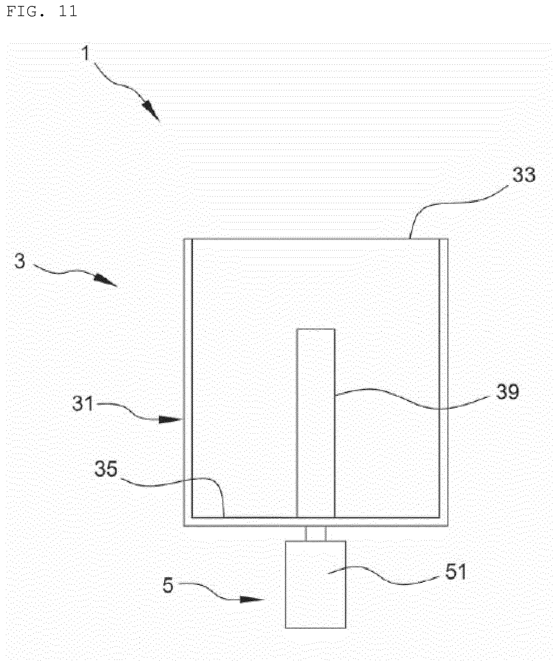

The cylinder 31, as shown in FIG. 11, may have an arranger rod 39 on the floor 35 instead of the arranger 37. The arranger rod 39, which is a rod disposed in a longitudinal direction at the rotational center of the floor 35 of the cylinder 31, enables a waste wire W that is stacked on the floor to be uniformly stacked without entangle in the opposite direction to rotation of the cylinder 31.

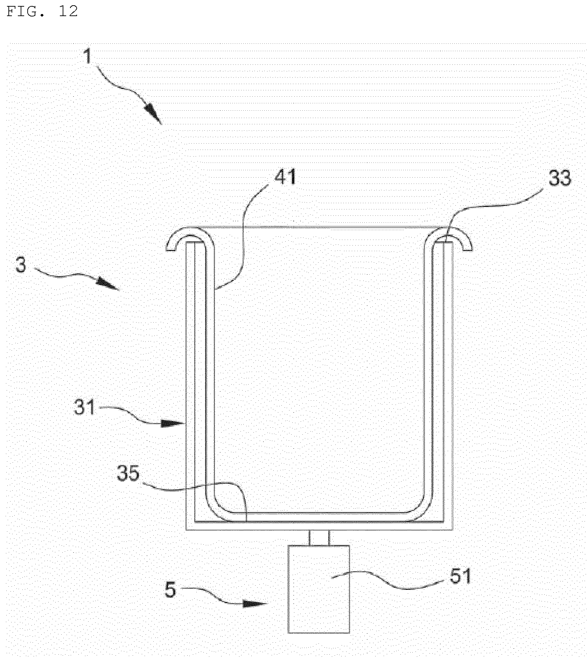

The cylinder 31, as shown in FIG. 12, may be configured with a package 41 such as a cloth bag disposed over the inner surface thereof. Accordingly, the package 41 secures a sufficient receiving space to be able to receive a waste wire W and is put into the cylinder 31 before the waste wire W is supplied. Thereafter, when the waste wire W is sufficiently received, the package 41 is taken out of the cylinder 31 and then carried and disposed of together with the waste wire W.

The rotational actuator 5, as another embodiment, as shown in FIG. 13, may include a support 43 rotatably supporting the cylinder 31 to stably support the cylinder 31 when directly rotating the cylinder 31 through the driving unit 51, and a driving unit 51 rotating the cylinder 31 on the support 43. The support 43 may be an external frame, and a thrust bearing or a rolling bearing may be disposed between the support 43 and the cylinder 31 to rotatably support the cylinder 31. The driving unit 51 may be a driving motor and may be indirectly connected to the cylinder 31 through a power transmission unit 53 such as a belt-pulley assembly.

Obviously, the cylinder 31 may include the arranger 37, the arranger rod 39, or the package 41 shown in FIGS. 10 to 12, and may further include a heater 44 for heating a waste wire W discharged from a wire electric discharge machine. Accordingly, a waste wire W is heated by the heater 44 before it is put into the waste wire recovery unit 3 or is stacked on the floor 35 of the cylinder 31, whereby remaining elasticity can be removed or reduced.

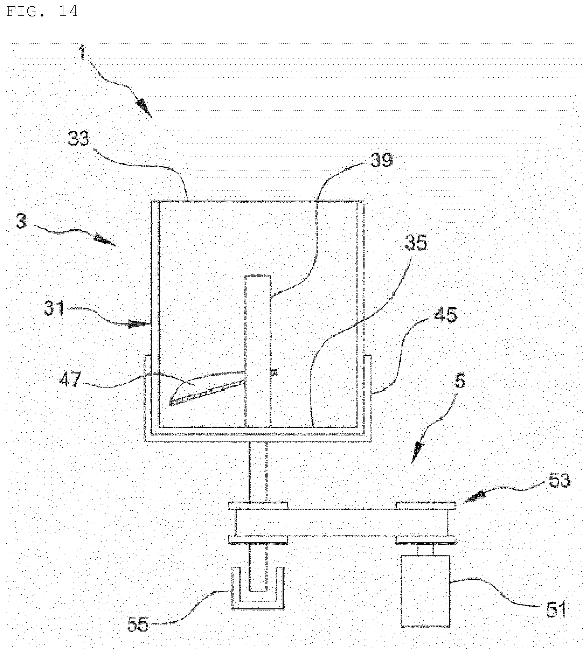

As another embodiment, the rotational actuator 5, as shown in FIG. 14, may include a rotation unit 45 and a driving unit 51 generating torque for the rotation unit 45. The rotation unit 45 is rotated while supporting the cylinder 31 and may be detachably coupled to the cylinder 31. The driving unit 51 such as a driving motor, as shown in FIG. 14, may be indirectly connected to the rotation unit 45 through the power transmission unit 53 such as a belt-pulley assembly, and, though not shown, may be directly connected to the bottom of the rotation unit 45. Obviously, even in this embodiment, the cylinder 31, as shown in FIGS. 9 to 15, may include the arranger 37, the arranger rod 39, the package 41, or the heater 44, and as shown in FIG. 14, may include a presser 47 that enables a waste wire W discharged from a wire electric discharge machine and put into the cylinder 31 to be uniformly stacked in a skein shape on the floor 35 of the cylinder 31. That is, the presser 47 presses a waste wire W from above such that the waste wire W does not become sparse when it is stacked on the floor 35. To this end, the presser 47 is disposed to be vertically movable in the cylinder 31, that is, as shown in FIG. 14, is fitted on the arranger rod 39 to be longitudinally movable in the embodiment. The presser 47 is a heavy plate or rod to press a waste wire W that is stacked in a skein shape, as described above, and is moved down at an angle radially outward from the arranger rod 39 such that a waste wire W put in the cylinder 31 is stacked inward from the outside of the floor 35.

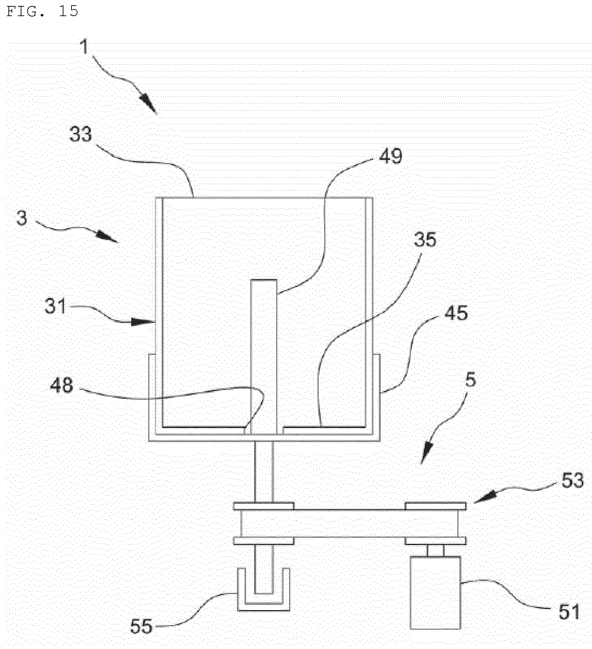

The rotational actuator 5, as another embodiment, as shown in FIG. 15, may have an arranger rod 39 or an arranger 37 (not shown) directly formed at the rotation unit 45. That is, the rotational actuator 5, as same as the embodiment shown in FIG. 4, includes a rotation unit 45 and a driving unit 51. The rotation unit 45 supporting and rotating the cylinder 31 has an arranger rod 49 disposed in a longitudinal direction at the rotational center, and the driving unit 51, similarly, generate torque for the rotation unit 45. Accordingly, the arranger rod 49, as shown in FIG. 15, longitudinally extends through the floor 35 of the cylinder 31, thereby functioning as the arranger rod 39 shown in FIG. 14. However, a through-hole 48 is formed in the cylinder 31 such that the arranger rod 49 can be fitted.

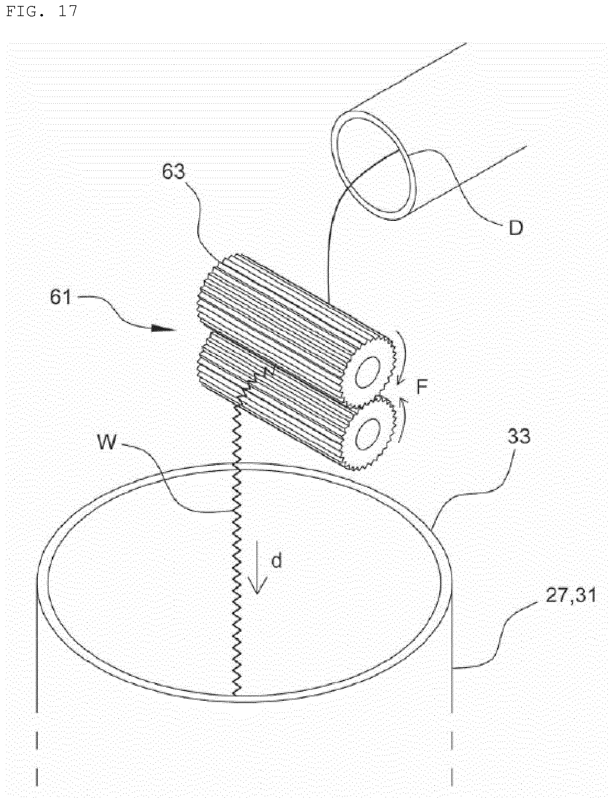

In the first embodiment shown in FIG. 2 to the latter and the second embodiment shown in FIG. 9 to the latter, as shown in FIG. 17, a bender 61 is installed over the retainer 27 or the opening 33 of the cylinder 31 adjacent to the outlet D of a wire electric discharge machine. The bender 61, which is provided to wrinkle a waste wire W discharged from the outlet D, may be any type as long as it can wrinkle a long and thin waste wire W, as shown in FIG. 17. As shown in the figure, the bender 61 may include a pair of bending rolls 63 engaged with each other and disposed close to the outlet D. The pair of bending rolls 63 discharges a waste wire W toward the opening 33 by rotating in the direction of an arrow F, but, in this process, the waste wire W should be discharged at the same speed as the discharge speed of the waste wire W, that is, the drop speed Vd of the waste wire W described above not to be cut during discharging.

In both of the recovery apparatuses 1 of the first and second embodiments, as shown in FIG. 2, the waste wire recovery unit 3 and the rotational actuator 5 rotatably supporting the waste wire recovery unit 3 are both installed and supported on a frame 71. It may be possible to measure in real time the weight of a recovered waste wire W from the difference in weight before and after recovery by measuring the weight of the entire frame 71 using a weight measurer 73. To this end, the weight measurer 73 may be a load cell, and the load cell is installed on the bottom of the frame 71, as shown in FIG. 2. The weight measurer 73 such as a load cell communicates with a controller or a wire electric discharge machine on the basis of IoT, thereby being able to provide the result of measuring the weight of a recovered waste wire to the controller or the wire electric discharge machine. Accordingly, real-time control such as stopping a waste wire from be discharged or stopping the waste wire recovery unit 3 from rotating when the waste wire is recovered by a desired weight is possible.

Meanwhile, the waste wire W recovered in a skein shape, as described above, has large stack density, so the waste wire may be returned to a seller in the box in which an electric discharge wire roll was sent when purchased.

The operation of a waste wire recovery apparatus 1 according to an embodiment of the present disclosure is described hereafter.

In order to recover a waste wire W using the waste wire recovery apparatus 1 of the present disclosure, as in both of the embodiments shown in FIGS. 2 and 9, first, the driving unit 51 is operated such that the waste wire recovery unit 3 is rotated by the rotational actuator 5 of the waste wire recovery unit 3. Accordingly, the plate body 21 and the cylinder 31 of the waste wire recovery unit 3 are rotated, whereby a waste wire W discharged from a wire electric discharge machine is received. The waste wire W is stacked in a circular shape from the drop point C on the floor 23, 35, as shown in FIGS. 3 and 16. However, as described above, the locus of the waste wire W that is stacked at the drop point C may be a perfect circle or the radius of the locus may gradually increase or decrease, depending on the difference between the linear speed Vt of the floor 35 and the drop speed Vd of the waste wire W. Then, when a predetermined amount of waste wire is stacked in a skein shape inside the cylinder 31, discharging of the waste wire W and rotation of the plate body 21 or the cylinder 31 are stopped and then the skein of the waste wire W is collected and packaged from the plate body 21 or the cylinder 31. Accordingly, the waste wire W can be finally carried and disposed of. The waste wire W that is packaged maintains the uniform skein shape without entangle, so the stack density in the package can be greatly increased. Further, since the retainer 27 can be removed from the plate body 21 before the waste wire W is recovered, the waste wire W can be more easily collected from the plate body 21.

Meanwhile, the waste wire recovery apparatus 1, as shown in FIGS. 7 and 10, etc., when the arranger 37 is formed at the center of the floor 23, 35 of the plate body 21 or the cylinder 31, a waste wire W is pushed away from the arranger 37 even if it is dropped to the center of the floor 23, 35, so the waste wire W can be more securely maintained in a skein shape.

Further, as shown in FIG. 11, when the arranger rod 39 is formed at the center of the floor 35 of the cylinder 31, a waste wire W cannot be dropped to the center of the floor 35, so the waste wire recovery apparatus 1 can more securely form the skein shape of the waste wire W.

Further, as shown in FIG. 11, when the package 41 such as a cloth bag is put in the cylinder 31 shown in FIGS. 9 to 11, a waste wire W put into the cylinder 31 is received and stacked in the package 41, so the waste wire W can be taken out with the package 41 without a separate packaging process when it is finally carried and disposed of. Accordingly, the efficiency of work that collects a waste wire can be greatly improved. However, in order to apply the package 41 to the cylinder 31 shown in FIG. 11, a hole through which the arranger rod 39 can pass should be formed through the bottom of the package 41. However, since the waste wire W is gathered in a skein shape, even if there is a hole, the waste wire W does not come out of the package 41 through the hole.

The waste wire recovery apparatus 1 shown in FIG. 13 also operates the driving unit 51 before starting recovery, thereby rotating the cylinder 31 rotatably supported on the support 43 through the power transmission unit 53. In this case, the cylinder 31 may also have the arranger 37, the arranger rod 39, and the package 41 shown in FIGS. 10 to 13. As shown in FIG. 13, when there is the heater 44, it is possible to heat a waste wire W before the waste wire W reaches the floor 35 of the cylinder 31, so it is possible to reduce or remove elasticity remaining in the waste wire W. Accordingly, the waste wire W is more uniformly stacked on the floor 35 or in the package 41 with the plasticity increased.

The waste wire recovery apparatus 1, as shown in FIG. 14, can rotate the cylinder 31 through the rotation unit 45. The driving mechanism of the rotation unit 45 by the driving unit 51 and the power transmission unit 53 is the same as the driving mechanism that rotates the cylinder 31 in FIG. 13. However, the embodiment shown in FIG. 14 is different in that the cylinder 31 is detachably coupled to the rotation unit 45 and rotated by the rotation unit 45. Accordingly, the rotation unit 45 is rotatably supported by a bearing 55.

Meanwhile, all the cylinders 31 shown in FIGS. 9 to 14 have the presser 47 therein and the presser 47 is mounted in various ways in the cylinder 31, but the presser 47 is fitted on the arranger rod 39 in this embodiment, as shown in FIG. 14. Accordingly, even if a waste wire W that is put into the cylinder 31 is dropped over the presser 47, the waste wire W is immediately moved and dropped to the outer edge of the floor 35 along the slope of the presser 47. Accordingly, the waste wire W is stacked on the floor 35 even though there is the presser 47, and pushes the presser 47 along the arranger rod 39 by being stacked upward as time passes. However, the waste wire W that is stacked in this process is pressed down by the presser 47, so it is stacked in a denser skein shape in comparison to when the presser 47 is not provided. Accordingly, the stack density in a cloth bag, etc. can be further increased when it is carried and disposed of.

Further, in the embodiment shown in FIG. 15, the cylinder 31 is detachably fixed to the rotation unit 45 and rotated by the rotation unit 45, similar to the embodiment shown in FIG. 14, but the arranger rod 39 is integrated with the rotation unit 45, so the arranger rod 39 does not need to be directly formed in the cylinder 31. However, in order to put the package 41 into the cylinder 31 with the arranger rod 39 therein, a through-hole 48 is formed through the bottom of the package 41. Similar to the package 41 applied to the cylinder 31 shown in FIG. 11, a waste wire W is stacked in a skein shape, so even though there is the through-hole 48 in the package 41, the waste wire W does not come out of the package 41 through the through-hole 48.

In both of the first and second embodiments, as shown in FIG. 17, since the bender 61 is disposed close to the outlet D of the wire electric discharge machine, a waste wire W discharged from the outlet D can be wrinkled by the bender 61. That is, a long and thin waste wire W is wrinkled while passing between the pair of bending rolls 63 engaged with each other, as shown in FIG. 17, and accordingly, the length of the waste wire W is decreased and the elasticity is also reduced in discharging, whereby the stack density is further increased.

### [Industrial Applicability]

According to the waste wire recovery apparatus of the present disclosure, since the waste wire recovery unit is rotated when a waste wire discharged from a wire electric discharge machine is received into the waste wire recovery unit, the waste wire can be uniformly collected in a skein shape in the waste wire recovery unit. Accordingly, the stack density of the waste wire received in the waste wire recovery unit can be increased. Further, it is possible to greatly improve the economic efficiency of reusing a waste wire such as reducing carriage by considerably increasing the amount of a waste wire that is transported at one time.

## Claims

1. A waste wire recovery apparatus comprising:
a waste wire recovery unit recovering a waste wire discharged from a wire electric discharge machine while rotating; and
a rotational actuator rotating the waste wire recovery unit.

2. The waste wire recovery apparatus of claim 1, wherein the waste wire recovery unit includes a plate body for receiving the waste wire, and the rotational actuator is connected to the plate body and rotates the plate body.

3. The waste wire recovery apparatus of claim 2, further comprising a retainer disposed around the plate body and preventing the waste wire received on the plate body from coming out of the plate body.

4. The waste wire recovery apparatus of claim 3, wherein the retainer is detachably disposed on the plate body and the plate body further includes a support supporting the retainer.

5. The waste wire recovery apparatus of any one of claims 2 to 4, wherein the plate body includes a slip plate that is rotatably installed on a floor of the plate body to collect the waste wire and relatively rotates in the opposite direction to a rotation direction of the plate body when a rotation speed of the plate body is greater than a drop speed of the waste wire.

6. The waste wire recovery apparatus of any one of claims 2 to 4, wherein the plate body has an arranger protruding at a rotational center.

7. The waste wire recovery apparatus of claim 6, wherein the arranger is an arranger rod detachably longitudinally disposed at the rotational center of the plate body.

8. The waste wire recovery apparatus of any one of claims 1 to 4, further comprising a binding string for binding the waste wire recovered in the waste wire recovery unit in one bundle.

9. The waste wire recovery apparatus of claim 1, wherein the waste wire recovery unit includes a cylinder having an opening to receive the waste wire, and the rotational actuator is connected to the cylinder and rotates the cylinder.

10. The waste wire recovery apparatus of claim 9, wherein the cylinder has an arranger protruding at a rotational center of the floor.

11. The waste wire recovery apparatus of claim 10, wherein the arranger is an arranger rod disposed in a longitudinal direction at the rotational center of the floor.

12. The waste wire recovery apparatus of any one of claims 9 to 11, further comprising a package overlapping the cylinder and fit in the cylinder to receive the waste wire.

13. The waste wire recovery apparatus of any one of claims 9 to 11, wherein the rotational actuator includes: a support rotatably supporting the cylinder; and a driving unit rotating the cylinder on the support.

14. The waste wire recovery apparatus of claim 13, further comprising a heater that heats the waste wire before the waste wire is stacked on the floor of the cylinder.

15. The waste wire recovery apparatus of any one of claims 9 to 11, wherein the rotational actuator includes: a rotation unit supporting and rotating the cylinder; and a driving unit generating torque for the rotation unit.

16. The waste wire recovery apparatus of claim 9, wherein the rotational actuator includes: a rotation unit supporting and rotating the cylinder and having an arranger disposed in a longitudinal direction through the bottom of the cylinder; and a driving unit generating torque for the rotation unit.

17. The waste wire recovery apparatus of any one of claims 9 to 11, further comprising a presser disposed to be longitudinally movable in the cylinder and pressing the waste wire put and stacked in the cylinder.

18. The waste wire recovery apparatus of any one of claims 1 to 4 or 9 to 11, further comprising a bender disposed close to an outlet of the wire electric discharge machine and wrinkling the waste wire discharged from the outlet.

19. The waste wire recovery apparatus of any one of claims 1 to 4 or 9 to 11, further comprising a weight measurer disposed on a frame of the rotational actuator rotatably supporting the waste wire recovery unit and measuring the weight of the waste wire recovered in the waste wire recovery unit.

20. The waste wire recovery apparatus of claim 19, wherein the weight measurer communicates with a controller or a wire electric discharge machine on the basis of IoT.
